Europäisches Patentamt

European Patent Office

Office européen des brevets

(19)

(11) Veröffentlichungsnummer: **0 276 381 B1**

# (12) EUROPÄISCHE PATENTSCHRIFT

(45) Veröffentlichungstag der Patentschrift: **31.07.91**

(51) Int. Cl.5: **B23K 35/02**, B23K 35/32, C23C 24/10

(21) Anmeldenummer: **87116207.9**

(22) Anmeldetag: **04.11.87**

(54) Verfahren zur Herstellung von Hartstoffschichten auf metallischen Unterlagen.

(30) Priorität: **30.01.87 DE 3702690**

(43) Veröffentlichungstag der Anmeldung:
**03.08.88 Patentblatt 88/31**

(45) Bekanntmachung des Hinweises auf die
Patenterteilung:
**31.07.91 Patentblatt 91/31**

(84) Benannte Vertragsstaaten:
**AT BE CH DE ES FR GB GR IT LI LU NL SE**

(56) Entgegenhaltungen:
EP-A- 0 154 183
GB-A- 2 027 617
US-A- 3 876 447

METAL PROGRESS, Band 124, Nr. 6, November 1983, Seiten 41-49, Metals Park, Ohio, US;
D.E. SHEWELL: "New method of applying wear resistant coatings"

PATENT ABSTRACTS OF JAPAN, Band 5, nr. 170 (M-94)[842], 29. Oktober 1981; & JP-A-56 95 489 (MITSUI KINZOKU KOGYO K.K.) 01-08-1981

(73) Patentinhaber: **Degussa Aktiengesellschaft**
**Weissfrauenstrasse 9**
**W-6000 Frankfurt am Main 1(DE)**

(72) Erfinder: **Mürrle, Ulrich, Dr. Dipl.-Ing.**
**Fürstenbergstrasse 2**
**W-6450 Hanau 9(DE)**
Erfinder: **Starz, Karl-Anton, Dr. Dipl.-Chem.**
**Bergstrasse 10 b**
**W-6458 Rodenbach(DE)**
Erfinder: **Szulczyk, Andreas, Dipl.-Ing.**
**Im Hirtengarten 31**
**W-6464 Linsengericht(DE)**
Erfinder: **Nauber, Jürgen, Dipl.-Ing.**
**August-Bebel-Strasse 10**
**W-6450 Hanau 11(DE)**

**Beschreibung**

Die Erfindung betrifft ein Verfahren zur Herstellung von Hartstoffschichten auf metallischen Unterlagen durch Aufbringung von flexiblen Formkörpern aus Kunststoffen, die Hartstoffe und Lotpulver enthalten, und Erhitzen unter Vakuum oder Schutzgas auf die Arbeitstemperaturen der verwendeten Lote.

Verschleißschutzschichten auf metallischen Gegenständen finden in vielen Bereichen der Technik Anwendung. Dazu werden beispielsweise keramische oder intermetallische Hartstoffe, wie Oxide, Carbide, Boride, Nitride und/oder Silicide, auf die metallischen Grundkörper aufgetragen. Der Auftrag erfolgt mittels bekannter Verfahren, wie Flammspritzen, Auftragschweißen oder Löten.

Aus der US-A-3 876 447 ist ein Verfahren zur Herstellung von Hartstoffschichten auf metallischen Unterlagen bekannt, indem aus Polytetrafluoräthylenpulver und Hartstoffpulver bzw. aus Polytetrafluoräthylenpulver und Lotpulver flexible Formteile erzeugt werden, diese übereinander auf die metallische Unterlage aufgebracht und auf höhere Temperaturen, je nach der Arbeitstemperatur der verwendeten Lote, erhitzt werden, wobei der Kunststoff sich thermisch zersetzt und das geschmolzene Lot die Bindung zwischen den Hartstoffteilchen und der metallischen Unterlage bewirkt. Dieses Verfahren hat aber den Nachteil, daß beim Erhitzen stark saure Zersetzungsprodukte entstehen, die unter anderem den Schutzgasofen korrosiv angreifen und daß die thermische Zersetzung des Polytetrafluoräthylens nur relativ langsam abläuft.

Es war daher Aufgabe der vorliegenden Erfindung, ein Verfahren zur Herstellung von Hartstoffschichten auf metallischen Unterlagen zu entwickeln, durch Aufbringung von flexiblen Formkörpern aus Kunststoffen, die Hartstoffe und Lotpulver enthalten, und Erhitzen unter Vakuum oder Schutzgas auf die Arbeitstemperaturen der verwendeten Lote, bei dem keine korrosiven Zersetzungsprodukte entstehen und bei dem die thermische Zersetzung der Kunststoffe möglichst rasch und vollständig erfolgt. Außerdem sollten die Kunststoffe ein großes Aufnahmevermögen für das Hartstoff- bzw. Lotpulver besitzen.

Diese Aufgabe wird erfindungsgemäß dadurch gelöst, daß als Kunststoff Ethylen-Vinylacetat-Copolymere, Ethylen-Propylen-Copolymere und/oder Butylkautschuk verwendet werden, und daß die Formkörper neben 5 bis 40 Vol % Kunststoff 5 bis 40 Vol % Poren, Rest Hartstoffe bzw. Lotpulver enthalten. Der Hartstoff- bzw. Lotanteil beträgt normalerweise 35 bis 75 Vol %.

Vorzugsweise enthalten die Formkörper 40 bis 70 Vol % Hartstoffe oder Lote, 10 bis 25 Vol % Kunststoff und bis 35 Vol % Poren.

Außerdem hat es sich als vorteilhaft erwiesen, auf die metallische Unterlage zuerst ein Formteil aufzubringen, das den Hartstoff enthält und darüber das Formteil mit dem Lotpulver.

Die keramischen oder intermetallischen Hartstoffpartikel werden in eine Matrix aus Ethylen-Propylen-Kautschuk, Butylkautschuk oder Ethylen-Vinylacetat eingelagert.

Zur Herstellung dieses Vorproduktes werden die keramischen oder intermetallischen Pulver in einem Kneter mit den entsprechenden Anteilen des Binders und Anteilen eines Lösungsmittels kalt angemischt. Diese Mischung wird solange geknetet, bis eine zähviskose Masse entstanden ist. Nach Entnahme der Masse aus dem Kneter wird diese zunächst vorgewalzt und dann einer Vortrocknung von etwa 16 h unterzogen. Danach können die Vorprodukte weiter verformt werden bis die gewünschte Enddicke der Formkörper erreicht ist. Das gleiche Verfahren wird zur Herstellung der Lotformkörper angewendet.

Auf diese Weise wird ein polymergebundenes Formteil mit Hartstoffüllung und ein polymergebundenes Formteil mit Lotpulver erhalten. Diese Formteile sind typischerweise zwischen 0,5 und 3 mm dick und zeichnen sich durch einen hohen Füllgrad, große Flexibilität und hohe Festigkeit aus.
Zur Erzeugung der Hartstoffschicht wird das zu beschichtende Substrat zunächst gereinigt und entfettet. Danach wird das Hartstoff-Formteil aufgebracht. Dabei hat es sich als vorteilhaft erwiesen, das Hartstoffformteil mit einem Kleber zu befestigen, damit auch geneigte und gekrümmte Flächen beschichtet werden können. Auf diese Schicht wird das Lotformteil aufgebracht. Dabei wird derselbe Kleber verwendet wie zum Aufbringen des Hartstoffformteils auf den Grundwerkstoff. Dieses Lotformteil ist in Dicke und Fullgrad so abgestimmt, daß beim Aufschmelzen des Porenvolumen des ausgebrannten Hartstoffformteils infiltriert wird. Gleichzeitig wird durch die günstigen Benetzungseigenschaften der Lote eine Verbindung der Hartstoffteilchen mit dem Grundwerkstoff erreicht.

Die verwendeten thermoplastischen Kunststoffe Ethylen-Propylen-Kautschuk, Butylkautschuk oder Ethylen-Vinylacetat zeichnen sich dadurch aus, daß sie sich bis zum Erreichen der Löttemperatur rückstandsfrei zersetzen. Ein besonders günstiges Verhalten wird dabei unter Wasserstoff erzielt. Ethylen-Vinylacetat, Butylkautschuk und Ethylen-Propylen-Kautschuk zersetzen sich ohne Entstehung aggressiver zersetzungsprodukte, die zur Verringerung der Lebensdauer der Ofenmuffeln führen werden. Beschichtungen, die nach dem erfindungsgemäßen Verfahren hergestellt sind, weisen weder kohlehaltige Einschlüsse noch Rückstände auf der Oberfläche auf, die durch eine Nachbehandlung entfernt werden müssen. Sie zeichnen sich auch durch eine geringe Rauheit aus.

Folgende Beispiele sollen das erfindungsgemäße Verfahren näher erläutern:

1. 3 kg Wolframcarbid-Pulver der Körnung kleiner 10 Mikrometer wurden mit 45 g Ethylen-Vinylacetat und 60 g Xylol für 30 min in einem Kneter geknetet. Die zähviskose Masse wurde dem Kneter entnommen und zwischen zwei Stahlblechen zu einem flächigen Vorprodukt gewalzt. Nach einer Lagerung von 16 Stunden in einem Lösungsmittelschrank wurde das Vorprodukt auf eine Enddicke von 2 mm gewalzt. Die Dichte des Produkts lag bei 10,5 g/cm³ und besaß 19 Vol 4% Restporosität. Das Vorprodukt konnte auf eine Rolle mit 10 cm Durchmesser gewickelt werden und zeichnete sich durch eine hohe Flexibilität und Reißfestigkeit aus.

2. 3 kg Chromcarbidpulver der Körnung kleiner 5 $\mu$m wurden mit 80 g Ethylen-Vinylacetat und 110 g Xylol 30 min lang geknetet. Die zähviskose Masse wurde dem Kneter entnommen und zwischen zwei Stahlblechen zu einem flächigen Vorprodukt gewalzt. Nach einer Lagerung von 16 Stunden wurde das Vorprodukt auf eine Enddicke von 1 $\mu$m fertiggewalzt. Die Dichte des Produkts lag bei 4,6 g/cm³ und besaß eine Restporosität von 22 Vol %. Das Vorprodukt konnte auf eine Rolle gewickelt werden und zeichnete sich durch hohe Flexibilität und Reißfestigkeit aus.

3. 2,5 kg Lotpulver der Zusammensetzung 82,6 Gew.% Ni, 7 Gew.% Cr, 3 Gew.% Fe, 4,5 Gew.% Si, 2,9 Gew.% B wurden mit 100 g Ethylen-Vinylacetat und 50 g Xylol für 30 min in einem Kneter geknetet. Nach der Entnahme der formlosen Masse aus dem Kneter wurde diese zwischen Stahlblechen zu einem flächigen Vorprodukt von 4 mm Dicke gewalzt. Nach einer Lagerung in einem Lösungsmittelschrank während 16 h wurde das Vorprodukt auf eine Dicke von 1 mm gewalzt. Es zeichnet sich durch große Flexibilität und hohe Festigkeit aus. Das Formteil besaß eine Porosität von 30 % und bestand aus 56,5 Vol % Lot und 13,5 Vol % Kunststoff.

4. Ein blechförmiges Substrat aus Stahl C 35 (2x5 cm) wurde entfettet und mit einem Hartstofformteil gemäß Beispiel 1 von 1,5 mm Dicke belegt. Auf diese Schicht wurde ein Lotformteil von 1 mm Dicke gemäß Beispiel 3 aufgelegt. Das so vorbeschichtete Substrat wurde sodann auf eine Temperatur von 1120° C während 5 Minuten unter strömendem Wasserstoff erhitzt. Nach dem Erhitzen war das Substrat mit einer glatten, rißfreien Wolframcarbid/Lot-Verbundschicht von 1,5 mm Dicke beschichtet. Die Härte betrug 1100 HV 30.

5. Ein blechförmiges Substrat aus C 35 (2x5 cm²) wurde entfettet und mit einem Hartstofformteil gemäß Beispiel 2 von 1 mm Dicke belegt. Auf diese Schicht wurde ein Lotformteil von 1 mm Dicke gemäß Beispiel 3 aufgelegt. Das so vorbeschichtete Substrat wurde sodann auf eine Temperatur von 1120° C unter strömendem Wasserstoff erhitzt. Nach dem Löten war das Substrat mit einer glatten rißfreien Chromcarbid/Lot-Verbundschicht von 1 mm Dicke überzogen. Die Härte betrug 900 HV 30.

6. Ein blechförmiges Substrat aus Stahl C 35 (2x5 cm²) wurde entfettet und mit einem 1mm dicken Hartstofformkörper aus 25 Vol % Ethylen-Vinylacetet und 45 Vol % Wolframcarbid der Körnung kleiner 2 Mikrometer belegt. Auf diese Schicht wurde ein Lotformkörper von 0,5 mm Dicke, bestehend aus 50 Vol % des im Beispiel 1 genannten Lotes und 25 Vol % Ethylen-Vinylacetat aufgelegt. Das so vorbeschichtete Substrat wurde auf eine Temperatur von 1120° C unter strömendem Wasserstoff erhitzt. Nach dem Erhitzen war das Substrat mit einer glatten rißfreien Wolframcarbid/Lot-Verbundschicht von 0,5 mm Dicke beschichtet. Die Härte betrug 1350 HV 30.

7. Ein blechförmiges Substrat aus Stahl C 35 (2x5 cm²) wurde entfettet und mit einem Hartstoffkörper auf Wolframcarbidbasis mit 1 mm Dicke aus 20 Vol % Ethylen-Propylen-Kautschuk und 30 % Restporosität belegt. Auf diese Schicht wurde ein Lotformkörper gleicher Fläche mit 0,5 mm Dicke aus einem Lotpulver, bestehend aus 86 Gew.% Kupfer, 2 Gew. % Nickel, 12 Gew. % Mangan, und 20 Vol % Ethylen-Propylen-Kautschuk aufgelegt. Das so vorbeschichtete Substrat wurde auf eine Temperatur von 1080° C unter strömendem Wasserstoff erhitzt. Man erhält eine glatte, rißfreie Wolframcarbid/Lot-Verbundschicht von 1 mm Dicke.

8. Ein 4 mm dickes Blech von 7,5 mm Kantenlänge aus Chrom-Nickel-Stahl wurde mit einem 1 mm dickem Hartstofformkörper auf Wolframcarbidbasis der Korngröße kleiner 10 Mikrometer belegt. Der Volumenanteil an Wolframcarbid betrug 50 %, an Kunststoff 16 %, an Restporosität 34 %. Darauf wurde ein Lotformkörper der im Beispiel 1 genannten Zusammensetzung mit einem Anteil von 10 Vol % Ethylen-Vinylacetat gelegt. Das so vorbeschichtete Substrat wurde in einem Vakuumofen bei 1120° C und einem Restdruck von $5 \times 10^{-2}$ mbar geglüht. Es entstand eine rißfreie Beschichtung. Unbeschichtete Teile des Chrom-Nickel-Stahl zeigen hierbei Anlauffarben.

## Patentansprüche

1. Verfahren zur Herstellung von Hartstoffschichten auf metallischen Unterlagen, durch Aufbringung von flexiblen Formkörpern aus Kunststoffen, die Hartstoffe und Lotpulver enthalten, und Erhitzen unter Vakuum oder Schutzgas auf die Arbeitstemperaturen der verwendeten Lote, dadurch gekennzeichnet, daß als Kunststoff Ethylen-Vinyl-acetat-Copolymere, Ethylen-Propylen-Copolymere und/oder Butylkautschuk verwendet werden und daß die Formkörper neben 5 bis 40 Vol % Kunststoff 5 bis 40 Vol. % Poren, Rest Hartstoffe bzw. Lotpulver enthalten.

2. Verfahren nach Anspruch 1, dadurch gekennzeichnet, daß die Formkörper 40 bis 70 Vol % Hartstoffe oder Lotpulver, 10 bis 25 Vol % Kunststoff und 15 bis 35 Vol % Poren enthalten.

3. Verfahren nach Anspruch 1 oder 2, dadurch gekennzeichnet, daß vor dem Erhitzen auf die metallische Unterlage zuerst ein Formkörper mit Hartstoffpulver und darüber ein Formkörper mit Lotpulver aufgebracht wird.

## Claims

1. A process for the production of hard-material coatings on metallic substrates by application of flexible mouldings of plastics containing hard materials and soldering powder and heating in vacuo or in an inert gas to the working temperatures of the solders used, characterized in that ethylene-vinyl acetate copolymers, ethylene-propylene copolymers and/or butyl rubber are used as the plastic and in that, in addition to 5 to 40 by volume plastic, the mouldings contain 5 to 40'− by volume pores and, for the rest, hard materials and soldering powder.

2. A process as claimed in claim l, characterized in that the mouldings contain 40 to 70 by volume hard materials or soldering powder, 10 to 25 by volume plastic and 15 to 35 by volume pores.

3. A process as claimed in claim l or 2, characterized in that, before heating, a moulding filled with hard-material powder is first applied to the metallic substrate and a moulding filled with soldering powder is then applied.

## Revendications

1. Procédé de fabrication de couches de matériau à réistance mécanique élevée sur des supports métalliques, par introduction de corps de forme flexibles en matières plastiques, contenant des matériaux durs et la poudre d'apport de brasage, et par chauffage sous vide ou sous gaz protecteur aux températures de travail des alliages utilisés, caractérisé en ce que, comme matière plastique, on utilise des copolymères de vinyle d'acétate d'éthylène, des copolymères d'éthylène-propylène et/ou du caoutchouc butyle et en ce que les corps de forme contiennent à peu près 5 à 40% en volume de matière plastique, 5 à 40% en volume de pores, le reste en matériau dur ou de métal d'apport de brasage.

2. Procédé selon la revendication 1, caractérisé en ce que les corps de forme contiennent de 40 à 70% en volume de matières solides et 15 à 35% en volume de pores.

3. Procédé selon une des revendications 1 ou 2, caractérisé en ce que, avant le chauffage, on introduit sur le support métallique d'abord un corps de forme avec de la poudre de substance dure et pardessus un corps de forme avec de la poudre de métal d'apport de brasage.